# EUROPÄISCHE PATENTSCHRIFT

(11) **EP 3 749 598 B1**
(45) Veröffentlichungstag und Bekanntmachung des Hinweises auf die Patenterteilung: **23.08.2023**
(21) Anmeldenummer: 19703055.4
(22) Anmeldetag: 31.01.2019
(51) Int. Cl.: B65G 43/08, B26D 7/32, B65G 47/64, B65G 47/08, B65G 47/68, B65G 57/32, B65B 25/06, B65B 35/50

(54) **FÖRDEREINRICHTUNG ZUR FÖRDERUNG VON LEBENSMITTELPRODUKTEN UND ZUGEHÖRIGES BETRIEBSVERFAHREN**
CONVEYOR FOR CONVEYING FOOD PRODUCTS AND ASSOCIATED OPERATING METHOD
DISPOSITIF DE TRANSPORT SERVANT AU TRANSPORT DE PRODUITS ALIMENTAIRES ET PROCÉDÉ DE FONCTIONNEMENT CORRESPONDANT

(30) Priorität: 09.02.2018 DE 102018102919
(43) Veröffentlichungstag der Anmeldung: 16.12.2020
(73) Patentinhaber: Provisur Technologies, Inc., Mokena, IL 60448 (US)
(72) Erfinder: BIALY, Jürgen, 25548 Oeschebüttel (DE)
(74) Vertreter: v. Bezold & Partner Patentanwälte - PartG mbB
(86) Internationale Anmeldenummer: PCT/EP2019/052401
(87) Internationale Veröffentlichungsnummer: WO 2019/154711

(56) Entgegenhaltungen:
- EP-A1- 0 886 615
- EP-A1- 3 069 836
- EP-A2- 2 479 111
- DE-A1- 3 642 123

## Beschreibung

Die Erfindung betrifft eine Fördereinrichtung zur Förderung von Lebensmittelprodukten (z. B. Wurstscheiben, Käsescheiben) und zur Formatierung der Lebensmittelprodukte in Produktstapeln. Weiterhin betrifft die Erfindung ein entsprechendes Betriebsverfahren.

Aus DE 10 2014 002 530 A1 ist eine ähnliche Fördereinrichtung bekannt, die jedoch zum Ziel hat, Produktlücken in den eingangsseitig einlaufenden Förderspuren aufzufüllen. Ähnliche Maschinen sind jedoch auch bekannt zum Stapeln von Lebensmittelprodukten (z. B. Wurstscheiben, Käsescheiben), siehe DE 36 42 123 A1 (dieses Dokument offenbart die Merkmale des Oberbegriffs des Anspruchs 1).

Die bekannten Maschinen zum Stapeln von Lebensmittelprodukten (z. B. Wurstscheiben, Käsescheiben) sind jedoch noch nicht hinreichend flexibel hinsichtlich der Formatierung der einlaufenden Lebensmittelprodukte in dem gewünschten Produktformat.

Zum technischen Hintergrund der Erfindung ist auch hinzuweisen auf EP 3 069 836 A1, EP 0 886 615 A1, DE 36 42 123 A1 und EP 2 479 111 A2.

Der Erfindung liegt deshalb die Aufgabe zugrunde, eine entsprechend verbesserte Fördereinrichtung und ein zugehöriges Betriebsverfahren zu schaffen.

Diese Aufgabe wird durch eine erfindungsgemäße Fördereinrichtung beziehungsweise ein entsprechendes Betriebsverfahren gemäß den unabhängigen Ansprüchen gelöst.

Die erfindungsgemäße Fördereinrichtung weist zunächst in Übereinstimmung mit dem Stand der Technik einen Einlass auf, um die Lebensmittelprodukte (z. B. Wurstscheiben, Käsescheiben) in Produktreihen aufzunehmen, die jeweils quer zur Förderrichtung ausgerichtet sind und jeweils mehrere Lebensmittelprodukte in parallelen Förderspuren enthalten.

In einem bevorzugten Ausführungsbeispiel der Erfindung ist der Fördereinrichtung eine Produktschneidevorrichtung ("Slicer") vorgeordnet, die Lebensmittelprodukte (z. B. große Schinkenstücke, Käseblöcke) in Scheiben zerschneidet und diese dann der erfindungsgemäßen Fördereinrichtung zur Formatierung und Stapelung zuführt.

Darüber hinaus weist die erfindungsgemäße Fördereinrichtung in Übereinstimmung mit dem Stand der Technik einen Verteilerförderer auf, der die Lebensmittelprodukte (z. B. Wurstscheiben, Käsescheiben) von dem Einlass der Fördereinrichtung aufnimmt und in Abhängigkeit von seiner Schwenkstellung wahlweise an einen oberen Produktförderer oder an einen unteren Produktförderer weiterleitet. Der obere Produktförderer und der untere Produktförderer sind hierbei übereinander angeordnet und werden von dem schwenkbaren Verteilerförderer mit den eingangsseitig einlaufenden Lebensmittelprodukten (z. B. Wurstscheiben, Käsescheiben) beschickt, wobei die Schwenkstellung des Verteilerförderers bestimmt, an welchen der beiden übereinander angeordneten Produktförderer die eingangsseitig einlaufenden Lebensmittelprodukte weitergeleitet werden.

Es wurde bereits vorstehend kurz erwähnt, dass die erfindungsgemäße Fördereinrichtung eine Stapelung der einlaufenden Lebensmittelprodukte (z. B. Wurstscheiben, Käsescheiben) ermöglicht. Beispielsweise können die einzelnen Produktstapel jeweils zwei Scheiben enthalten, falls zwei Produktförderer übereinander angeordnet sind. Es ist jedoch auch möglich, dass die einzelnen Produktstapel am Ausgang eine größere Anzahl von Scheiben enthalten, was dann eine entsprechend größere Anzahl von übereinander angeordneten Produktförderern erfordert. Bei einer Formatierung in Produktstapeln mit drei übereinanderliegenden Scheiben sind dann entsprechend drei übereinander angeordnete Produktförderer erforderlich, die von dem schwenkbaren Verteilerförderer mit den eingangsseitig einlaufenden Lebensmittelprodukten (z. B. Wurstscheiben, Käsescheiben) beschickt werden.

Darüber hinaus umfasst die erfindungsgemäße Fördereinrichtung in Übereinstimmung mit dem Stand der Technik einen Ausgangsförderer, der die Lebensmittelprodukte von dem unteren Produktförderer und dem oberen Produktförderer teilweise gestapelt übernimmt. Der obere Produktförderer legt die Lebensmittelprodukte also auf den Lebensmittelprodukten ab, die von dem unteren Produktförderer gefördert werden, was zu einer entsprechenden Stapelung führt.

Hierbei ist zu bemerken, dass der im Rahmen der Erfindung verwendete Begriff von Produktstapeln allgemein zu verstehen ist. Beispielsweise können die einzelnen Scheiben der Produktstapel mit einer hundertprozentigen Überdeckung übereinander gestapelt sein, d. h. die einzelnen Scheiben liegen in dem Produktstapel deckungsgleich übereinander. Es besteht jedoch im Rahmen der Erfindung auch die Möglichkeit, dass die übereinander liegenden Scheiben zueinander versetzt sind ("staggered stack"), so dass die Überdeckung der übereinander liegenden Scheiben innerhalb der Produktstapel nur teilweise ist. Darüber hinaus können die Produktstapel auch geschindelt sein, wie es an sich aus dem Stand der Technik bekannt ist.

Der Ausgangsförderer liefert die in Produktstapel formatierten Lebensmittelprodukte (z. B. Wurstscheiben, Käsescheiben) dann an einen Auslass, wo die gestapelten Lebensmittelprodukte wieder in Produktreihen ausgegeben werden, wobei die Produktreihen quer zur Förderrichtung ausgerichtet sind und jeweils mehrere Lebensmittelprodukte in parallelen Spuren als Produktstapel enthalten.

Die erfindungsgemäße Fördereinrichtung zeichnet sich nun dadurch aus, dass die einzelnen Förderspuren des Verteilerförderers unabhängig voneinander vertikal schwenkbar sind, um die einlaufenden Lebensmittelprodukte individuell für jede Förderspur wahlweise an den unteren Produktförderer oder an den oberen Produktförderer weiterzuleiten. Im Gegensatz dazu kann der Verteilerförderer bei der bekannten Fördereinrichtung gemäß DE 10 2014 002 530 A1 nur als Ganzes mit allen Förderspuren entweder nach oben oder nach unten geschwenkt werden. Die spurindividuelle Verschwenkbarkeit der einzelnen Förderspuren des Verteilerförderers erhöht vorteilhaft die Flexibilität bei der Formatierung und Stapelung der eingangsseitig einlaufenden Lebensmittelprodukte (z. B. Wurstscheiben, Käsescheiben). Beispielsweise ist es auf diese Weise möglich, acht einlaufende Förderspuren mit Lebensmittelprodukten in vier auslaufende Förderspuren zu formatieren, die jeweils einen Produktstapel mit zwei Scheiben enthalten.

Vorzugsweise können alle Förderspuren des Verteilerförderers unabhängig und individuell nach oben beziehungsweise nach unten geschwenkt werden. Es besteht jedoch alternativ auch die Möglichkeit, dass die Förderspuren des Verteilerförderers jeweils gruppenweise nach oben beziehungsweise nach unten geschwenkt werden können. Beispielsweise kann der Verteilerförderer zwei Schwenkteile aufweisen, die unabhängig voneinander nach oben beziehungsweise nach unten geschwenkt werden können und die jeweils zwei Förderspuren umfassen. Anstelle einer solchen symmetrischen 2:2-Aufteilung des Verteilerförderers sind jedoch auch asymmetrische Aufteilungen des Verteilerförderers möglich, beispielsweise mit einer einzigen Förderspur in dem einen Schwenkteil des Verteilerförderers und drei Förderspuren in dem anderen Schwenkteil des Verteilerförderers. Darüber hinaus ist es auch möglich, dass der Verteilerförderer mehr als zwei Schwenkteile aufweist, die unabhängig voneinander nach oben beziehungsweise nach unten geschwenkt werden können. In dem bevorzugten Ausführungsbeispiel der Erfindung ist die Anzahl der unabhängig voneinander schwenkbaren Schwenkteile des Verteilerförderers jedoch gleich der Anzahl der Förderspuren des Verteilerförderers, was eine maximale Flexibilität ermöglicht.

Darüber hinaus ist zu erwähnen, dass vorzugsweise mindestens einer der übereinander angeordneten Produktförderer ein sogenannter Shuttle-Förderer ist, der quer zu der Förderrichtung verfahrbar ist. Beispielsweise kann nur der obere Produktförderer ein solcher Shuttle-Förderer sein. Es besteht alternativ jedoch auch die Möglichkeit, dass nur der untere Produktförderer ein solcher Shuttle-Förderer ist. Darüber hinaus besteht auch die Möglichkeit, dass alle Produktförderer als Shuttle-Förderer ausgebildet sind, was jedoch zu einer größeren Komplexität führt. Das seitliche Verfahren des Shuttle-Förderers ermöglicht es hierbei, die eingangsseitig nebeneinander einlaufenden Lebensmittelprodukte seitlich für eine anschließende Stapelung mit der gewünschten Überdeckung auszurichten. Falls beispielsweise eingangsseitig acht Förderspuren mit Lebensmittelprodukten einlaufen, während ausgangsseitig vier Förderspuren mit Produktstapeln auslaufen sollen, so müssen die eingangsseitig einlaufenden Lebensmittelprodukte jeweils paarweise zu Produktstapeln zusammengeführt werden. Dies setzt voraus, dass ein Lebensmittelprodukt des jeweiligen Paars durch den Shuttle-Förderer seitlich versetzt wird, damit die beiden Lebensmittelprodukte des jeweiligen Paars gestapelt werden können.

In dem bevorzugten Ausführungsbeispiel der Erfindung ermöglicht der Shuttle-Förderer einen maximalen seitlichen Versatz, der exakt einer Förderspur entspricht. Es ist jedoch im Rahmen der Erfindung auch möglich, dass der Shuttle-Förderer einen seitlichen Versatz ermöglicht, der mehrere Förderspuren umfasst.

In dem bevorzugten Ausführungsbeispiel der Erfindung ermöglicht die Fördereinrichtung zwei Betriebsarten, die in Abhängigkeit von der Anzahl der eingangsseitig einlaufenden Förderspuren und der Anzahl der ausgangsseitig auslaufenden Förderspuren bestimmt wird, wobei die Betriebsart von einer Steuereinrichtung ausgewählt und vorgegeben wird, die auch den Verteilerförderer ansteuert, wie nachfolgend detailliert beschrieben wird.

So stellt die Steuereinrichtung eine erste Betriebsart ein, wenn die Anzahl der Lebensmittelprodukte in den eingangsseitig einlaufenden Produktreihen doppelt so groß ist wie die Anzahl der Lebensmittelprodukte in den ausgangsseitig auslaufenden Produktreihen. Dies ist beispielsweise der Fall, wenn die eingangsseitig einlaufenden Produktreihen jeweils acht Scheiben von Lebensmitteln nebeneinander enthalten, während die ausgangsseitig auslaufenden Produktreihen jeweils vier Produktstapel mit jeweils zwei Scheiben umfassen.

In dieser ersten Betriebsart steuert die Steuereinrichtung den Verteilerförderer so an, dass die einzelnen Schwenkteile des Verteilerförderers individuell für die einzelnen Förderspuren entweder nach oben zu dem oberen Produktförderer oder nach unten zu dem unteren Produktförderer geschwenkt werden. Vorzugsweise werden die geradzahligen Schwenkteile des Verteilerförderers nach oben geschwenkt, während die ungeradzahligen Schwenkteile des Verteilerförderers nach unten geschwenkt werden. Es ist jedoch umgekehrt auch möglich, dass die geradzahligen Schwenkteile des Verteilerförderers nach unten geschwenkt werden, während die ungeradzahligen Schwenkteile des Verteilerförderers nach oben geschwenkt werden. Entscheidend ist hierbei lediglich, dass die Schwenkteile des Verteilerförderers quer zur Förderrichtung abwechselnd nach oben beziehungsweise nach unten geschwenkt werden.

Darüber hinaus steuert die Steuereinrichtung in dieser ersten Betriebsart den Shuttle-Förderer so an, dass die Lebensmittelprodukte auf dem Shuttle-Förderer seitlich verschoben werden, um die gewünschte seitliche Überdeckung mit den Lebensmittelprodukten auf dem anderen Produktförderer zu ermöglichen, da nur dies eine Stapelung der Lebensmittelprodukte ermöglicht. Beispielsweise kann der Shuttle-Förderer die Lebensmittelprodukte um exakt eine Förderspur verschieben, falls eine vollständige Überdeckung der gestapelten Lebensmittelprodukte gewünscht ist. Es ist jedoch beispielsweise auch möglich, dass der Shuttle-Förderer die Lebensmittelprodukte nur um eine halbe Förderspur seitlich verschiebt, falls nur eine fünfzigprozentige Überdeckung der Scheiben in dem Produktstapel gewünscht ist.

Beispielsweise können dann die ungeradzahligen Lebensmittelprodukte (d. h. die Lebensmittelprodukte an 1., 3., 5., 7.,... Stelle) in den einzelnen Produktreihen nach oben geleitet werden, während die geradzahligen Lebensmittelprodukte (d. h. die Lebensmittelprodukte an 2., 4., 6., 8.,... Stelle) in den einzelnen Produktreihen nach unten geleitet werden. Die geradzahligen Lebensmittelprodukte der einzelnen Produktreihen werden dann mit den ungeradzahligen Lebensmittelprodukten der einzelnen Produktreihen in Produktstapel von jeweils zwei Scheiben gestapelt.

Hierbei ist zu erwähnen, dass in der ersten Betriebsart die Schwenkstellung der einzelnen Schwenkteile des Verteilerförderers nicht dynamisch geändert wird, sondern während der Dauer der ersten Betriebsart beibehalten wird. Es ist hierbei also nicht erforderlich, die Schwenkstellung des Verteilerförderers in der ersten Betriebsart dynamisch zu ändern.

Darüber hinaus ermöglicht die erfindungsgemäße Fördereinrichtung eine zweite Betriebsart, die von der Steuereinrichtung eingestellt wird, wenn die Anzahl der Lebensmittelprodukte in den eingangsseitig einlaufenden Produktreihen gleich der Anzahl der Lebensmittelprodukte in den ausgangsseitig auslaufenden Produktreihen ist. Beispielsweise ist dies der Fall, wenn die eingangsseitig einlaufenden Produktreihen jeweils vier Lebensmittelprodukte enthalten, während die ausgangsseitig auslaufenden Produktreihen jeweils vier Produktstapel mit jeweils zwei übereinander gestapelten Scheiben enthalten sollen.

In dieser zweiten Betriebsart steuert die Steuereinrichtung den Verteilerförderer so an, dass alle Schwenkteile des Verteilerförderers mit allen Förderspuren gemeinsam entweder nach oben zu dem oberen Produktförderer oder nach unten zu dem unteren Produktförderer geschwenkt werden.

Hierbei wird die Schwenkstellung des Verteilerförderers während des Betriebs dynamisch geändert. Vorzugsweise werden die eingangsseitig einlaufenden Produktreihen von dem Verteilerförderer abwechselnd nach oben zu dem oberen Produktförderer und nach unten zu dem unteren Produktförderer geleitet. Die Produktreihen auf dem oberen Produktförderer werden dann auf die Produktreihen von dem unteren Produktförderer gestapelt.

Zum einen führt dies in der zweiten Betriebsart zu einer Halbierung der Taktrate von der Eingangsseite der Fördereinrichtung zu der Ausgangsseite der Fördereinrichtung, d. h. die Aufnahmerate der einzelnen Produktreihen am Eingang ist doppelt so groß wie die Ausgaberate der Produktreihen am Ausgang, da jeweils zwei Produktreihen zu einer gestapelten Produktreihe zusammengeführt werden.

Zum anderen bedeutet dies aber auch, dass in dieser zweiten Betriebsart keine seitliche Verschiebung mittels des Shuttle-Förderers erforderlich ist, falls eine vollständige Überdeckung der einzelnen Scheiben in dem fertigen Produktstapel gewünscht ist. Falls dagegen eine fünfzigprozentige Überdeckung der einzelnen Scheiben in dem fertigen Produktstapel gewünscht ist, so muss der Shuttle-Förderer in dieser Betriebsart um eine halbe Förderspur seitlich verfahren werden, um die gewünschte Überdeckung zu erreichen.

Ferner ist zu erwähnen, dass die erfindungsgemäße Fördereinrichtung als Stand-alone-Gerät ausgebildet sein kann, was eine nachträgliche Integration in bereits bestehende Verarbeitungslinien ermöglicht. Es ist jedoch alternativ auch möglich, dass die erfindungsgemäße Fördereinrichtung in ein anderes Gerät (z. B. Produktschneidemaschine, Einleger) integriert wird.

Zusätzlich zu der vorstehend beschriebenen erfindungsgemäßen Fördereinrichtung beansprucht die Erfindung auch Schutz für ein entsprechendes Betriebsverfahren, wobei sich die einzelnen Schritte des erfindungsgemäßen Betriebsverfahrens bereits aus der vorstehenden Beschreibung der Funktionsweise der Fördereinrichtung ergeben, so dass auf eine separate Beschreibung der einzelnen Schritte des Betriebsverfahrens verzichtet werden kann.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1: Eine Seitenansicht einer erfindungsgemäßen Verarbeitungslinie zur Verarbeitung von Fleischprodukten mit einer Produktschneidemaschine, einer erfindungsgemäßen Fördereinrichtung und einem Einleger,
- Figur 2: eine Aufsicht auf die Verarbeitungslinie gemäß Figur 1,
- Figur 3: eine Seitenansicht der erfindungsgemäßen Fördereinrichtung aus den Figuren 1 und 2,
- Figur 4A: eine Aufsicht auf die erfindungsgemäße Fördereinrichtung gemäß Figur 3 in einer ersten Betriebsart,
- Figur 4B: eine Aufsicht auf die erfindungsgemäße Fördereinrichtung gemäß Figur 3 in einer zweiten Betriebsart,
- Figur 5: eine Detailvergrößerung aus Figur 4B,
- Figur 6A: ein Flussdiagramm zur Verdeutlichung der ersten Betriebsart gemäß Figur 4A, sowie
- Figur 6B: ein Flussdiagramm zur Verdeutlichung der zweiten Betriebsart gemäß Figur 4B.

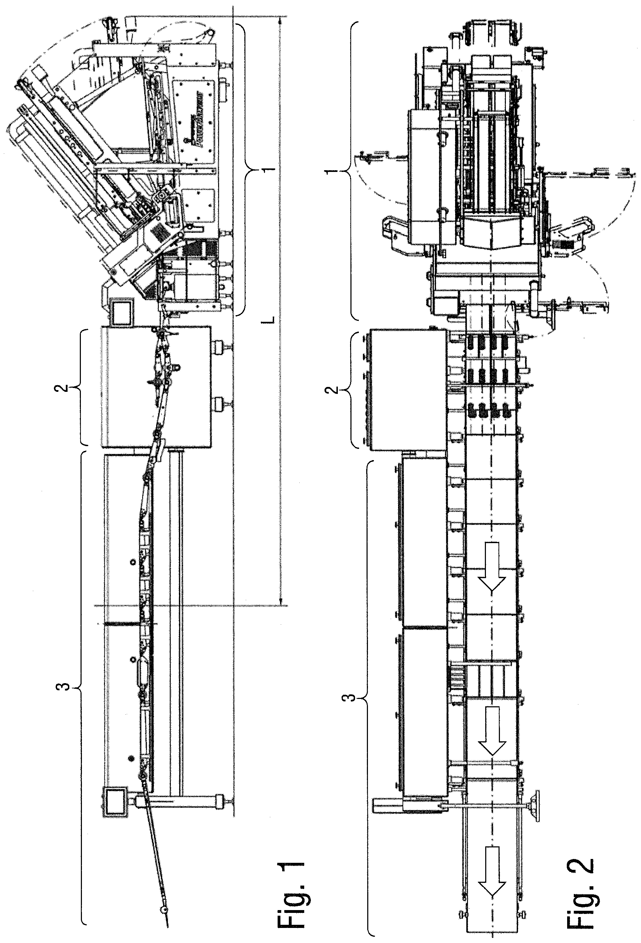

Die Figuren 1 und 2 zeigen verschiedene Ansichten einer Verarbeitungslinie zur Verarbeitung von Lebensmittelprodukten (z. B. Wurst, Käse).

Die Verarbeitungslinie weist zunächst eine Produktschneidemaschine 1 auf, die auch als "Slicer" bezeichnet wird und herkömmlich aufgebaut sein kann. Ein Beispiel für Konstruktion und Funktionsweise der Produktschneidemaschine 1 ist in US 6 763 750 B2 beschrieben.

Die Produktschneidemaschine 1 liefert Produktreihen von Lebensmittelscheiben (z. B. Wurstscheiben, Käsescheiben) an eine nachgeordnete Fördereinrichtung 2, welche die Lebensmittelproduktscheiben formatiert und stapelt, wie noch detailliert beschrieben wird.

Die Fördereinrichtung 2 liefert die Produktstapel dann an einen nachgeordneten Einleger 3, der ebenfalls herkömmlich aufgebaut sein kann, wobei ein Beispiel für Aufbau und Funktionsweise des Einlegers 3 in EP 2 030 898 B1 beschrieben ist.

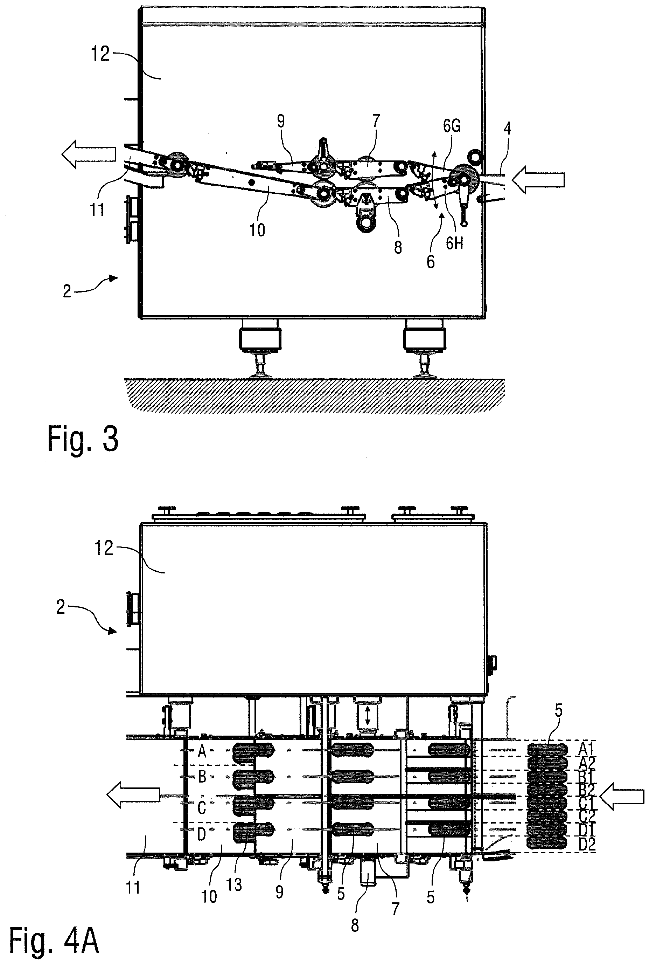

Die Erfindung betrifft im Wesentlichen den Aufbau und die Funktionsweise der Fördereinrichtung 2, die in Figur 3 im Detail dargestellt ist und nachfolgend beschrieben wird.

Zunächst weist die Fördereinrichtung 2 einen Einlass 4 auf, der durch einen Ausgangsförderer der Produktschneidemaschine 1 gebildet werden kann. An dem Einlass 4 nimmt die Fördereinrichtung 2 Produktreihen auf, die jeweils quer zur Förderrichtung ausgerichtet sind und jeweils mehrere Lebensmittelprodukte 5 in parallelen Förderspuren enthalten. Hierbei ist zu erwähnen, dass die Förderrichtung in den Zeichnungen durch Blockpfeile dargestellt ist.

Weiterhin umfasst die Fördereinrichtung 2 einen Verteilerförderer 6, der die eingangsseitig einlaufenden Lebensmittelprodukte 5 übernimmt und verteilt. Hierbei ist zu erwähnen, dass der Verteilerförderer 6 insgesamt acht Schwenkteile 6A-6H umfasst, die unabhängig voneinander nach oben beziehungsweise nach unten geschwenkt werden können und jeweils eine Förderspur für jeweils eines der Lebensmittelprodukte 5 umfassen. Der Verteilerförderer 6 weist also in diesem Ausführungsbeispiel insgesamt acht Förderspuren A1, A2, B1, B2, C1, C2, D1, D2 auf, so dass jede Produktreihe an dem Einlass 4 der Fördereinrichtung 2 insgesamt acht der Lebensmittelprodukte 5 umfassen kann.

In der Förderrichtung hinter dem Verteilerförderer 6 sind ein oberer Produktförderer 7 und ein unterer Shuttle-Förderer 8 übereinander angeordnet. Die einzelnen Schwenkteile 6A-6H des Verteilerförderers 6 können die eingangsseitig einlaufenden Lebensmittelprodukte 5 spurindividuell wahlweise nach oben zu dem oberen Produktförderer 7 oder nach unten zu dem unteren Shuttle-Förderer 8 leiten, wie noch detailliert beschrieben wird.

In Förderrichtung hinter dem oberen Produktförderer 7 befindet sich ein oberer Übergabeförderer 9, während sich in Förderrichtung hinter dem unteren Shuttle-Förderer 8 ein Ausgangsförderer 10 befindet. Der obere Übergabeförderer 9 kann die Lebensmittelprodukte 5 dann auf die Lebensmittelprodukte 5 auf dem Ausgangsförderer 10 ablegen und dadurch Produktstapel 13 mit jeweils zwei Scheiben erzeugen.

Ferner weist die Fördereinrichtung 2 einen Auslass 11 auf, der beispielsweise durch einen Förderer des nachgeordneten Einlegers 3 gebildet werden kann und von dem Ausgangsförderer 10 beschickt wird.

Weiterhin ist noch zu erwähnen, dass der untere Shuttle-Förderer 8 seitlich zu der Förderrichtung verfahrbar ist, um die Lebensmittelprodukte 5 für eine anschließende Stapelung seitlich (d. h quer zur Förderrichtung) aneinander auszurichten, wie noch detailliert beschrieben wird. Das seitliche Verfahren des Shuttle-Förderers 8 ist an sich aus dem Stand der Technik bekannt und wird durch eine Steuereinrichtung gesteuert, die in einem Gehäuse 12 der Fördereinrichtung 2 angeordnet ist.

Die Fördereinrichtung 2 ermöglicht zwei verschiedene Betriebsarten, die in Abhängigkeit von der Anzahl der eingangsseitig einlaufenden Förderspuren und in Abhängigkeit von der Anzahl der ausgangsseitig einlaufenden Förderspuren ausgewählt werden.

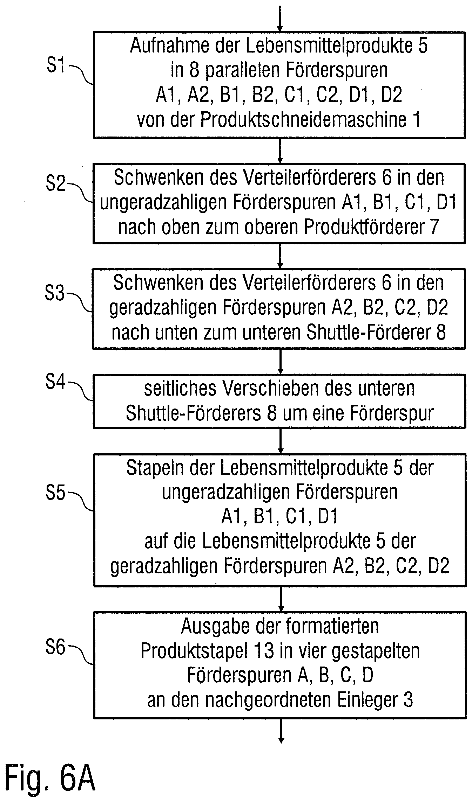

So zeigen die Figuren 4A und 6A eine erste Betriebsart mit acht eingangsseitig einlaufenden Förderspuren A1, A2, B1, B2, C1, C2, D1, D2 und vier ausgangsseitig auslaufenden Förderspuren A-D.

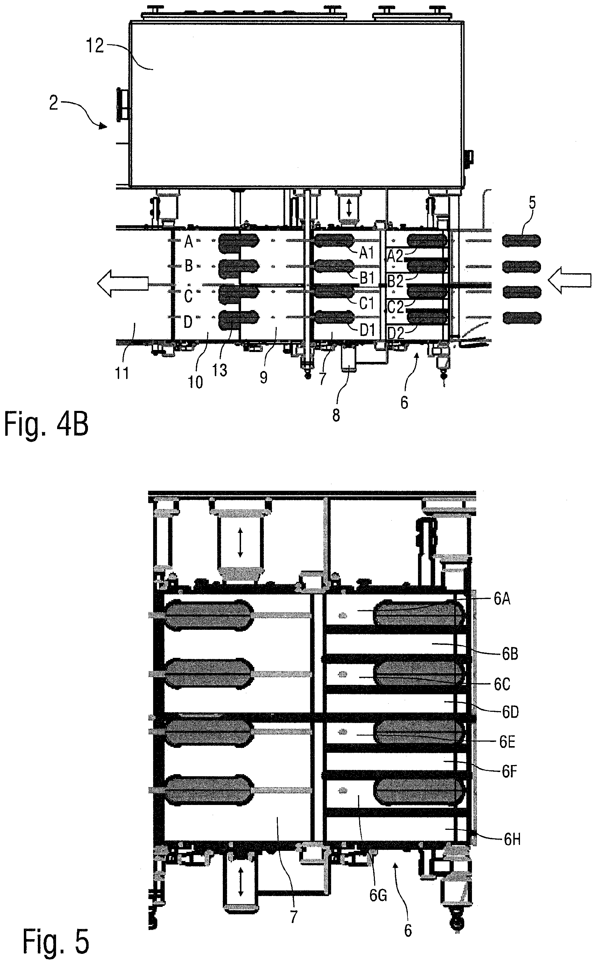

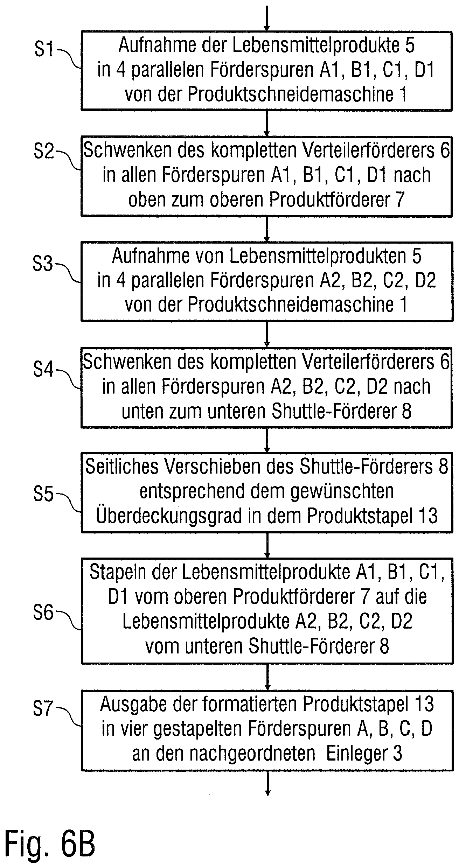

Die Figuren 4B und 6B verdeutlichen dagegen eine zweite Betriebsart mit vier eingangsseitig einlaufenden Förderspuren A-D und vier ausgangsseitig auslaufenden Förderspuren A-D.

Im Folgenden wird nun unter Bezugnahme auf die Figuren 4a und 6A zunächst die erste Betriebsart beschrieben, in der die Anzahl der eingangsseitig einlaufenden Förderspuren (acht) doppelt so groß ist wie die Anzahl der ausgangsseitig auslaufenden Förderspuren (vier).

In dieser ersten Betriebsart werden in einem Schritt S1 eingangsseitig acht parallele Förderspuren A1-D2 der Lebensmittelprodukte 5 aufgenommen.

Die einzelnen Schwenkteile 6A-6H des Verteilerförderers 6 werden in den Schritten S2, S3 quer zur Förderrichtung abwechselnd nach oben zu dem oberen Produktförderer 7 beziehungsweise nach unten zu dem unteren Shuttle-Förderer 8 geschwenkt. Dies bedeutet, dass die eingangsseitig einlaufenden Lebensmittelprodukte 5 entlang jeder Produktreihe abwechselnd nach oben beziehungsweise nach unten geleitet werden.

In einem Schritt S4 verschiebt der Shuttle-Förderer 8 dann die Lebensmittelprodukte 5 auf dem unteren Shuttle-Förderer 8 in seitlicher Richtung quer zu der Förderrichtung um ungefähr eine Förderspur, um anschließend die gewünschte Überdeckung der Lebensmittelprodukte 5 in den einzelnen Produktstapeln zu ermöglichen.

In einem Schritt S5 stapelt der Übergabeförderer 9 dann die Lebensmittelprodukte 5 aus den ungeradzahligen Förderspuren A1-D1 auf die Lebensmittelprodukte 5 aus den geradzahligen Förderspuren A2-D2.

An dem Auslass 11 werden dann jeweils Produktstapel 13 mit jeweils zwei Scheiben ausgegeben, wobei jede Produktreihe an dem Auslass 11 vier Produktstapel 13 mit jeweils zwei Scheiben umfasst.

Im Folgenden wird nun unter Bezugnahme auf die Figuren 4B und 6B die zweite Betriebsart der Fördereinrichtung 2 beschrieben. In dieser zweiten Betriebsart wird in einem Schritt S1 zunächst eine erste Produktreihe mit vier Lebensmittelprodukten 5 aus vier parallelen Förderspuren A1-D1 aufgenommen.

In einem Schritt S2 schwenkt dann der komplette Verteilerförderer 6 mit allen seinen Schwenkteilen 6A-6H nach oben zu dem oberen Produktförderer 7, der somit die erste Produktreihe komplett aufnimmt.

In einem weiteren Schritt S3 wird dann eine weitere Produktreihe von Lebensmittelprodukten in vier parallelen Förderspuren A2-D2 aufgenommen.

Der komplette Verteilerförderer 6 wird dann mit allen seinen Schwenkteilen 6A-6H in einem Schritt S4 nach unten zu dem unteren Shuttle-Förderer 8 geschwenkt, der somit die zweite Produktreihe vollständig aufnimmt.

In einem Schritt S5 kann der Shuttle-Förderer 8 dann seitlich verschoben werden, um die Lebensmittelprodukte auf dem unteren Shuttle-Förderer 8 seitlich in Bezug auf die Lebensmittelprodukte auf dem oberen Produktförderer 7 auszurichten.

Falls in den Produktstapeln 13 eine hundertprozentige Überdeckung der übereinander gestapelten Scheiben gewünscht ist, so muss der Shuttle-Förderer 8 gar nicht in seitlicher Richtung verschoben werden.

Falls in den Produktstapeln 13 dagegen eine fünfzigprozentige Überdeckung der übereinander gestapelten Scheiben gewünscht ist, so muss der Shuttle-Förderer 8 um eine halbe Förderspur in seitlicher Richtung verschoben werden.

Der seitliche Verschiebeweg des Shuttle-Förderers 8 hängt hierbei also von der gewünschten Überdeckung der Scheiben in dem fertigen Produktstapel ab.

In einem Schritt S6 werden dann die Lebensmittelprodukte 5 von dem oberen Produktförderer 7 auf die Lebensmittelprodukte 5 von dem unteren Shuttle-Förderer 8 gestapelt.

Am Auslass 11 werden dann Produktreihen mit jeweils vier Produktstapeln 13 ausgegeben (Schritt S7).

### Bezugszeichenliste:

- 1: Produktschneidemaschine
- 2: Fördereinrichtung
- 3: Einleger
- 4: Einlass der Fördereinrichtung
- 5: Lebensmittelprodukte
- 6: Verteilerförderer
- 6A-6H: Schwenkteile des Verteilerförderers
- 7: Oberer Produktförderer
- 8: Untere Shuttle-Förderer
- 9: Oberer Übergabeförderer
- 10: Ausgangsförderer
- 11: Auslass
- 12: Gehäuse der Fördereinrichtung
- 13: Produktstapel
- A-D: Ausgangsseitige Förderspuren
- A1-D2: Eingangsseitige Förderspuren

## Patentansprüche

1. Fördereinrichtung (2) zur Förderung von Lebensmittelprodukten, insbesondere Wurstscheiben oder Käsescheiben, und zur Formatierung der Lebensmittelprodukte (5) in Produktstapeln (13), mit
a) einem Einlass (4) zur Aufnahme der Lebensmittelprodukte (5) in Produktreihen, die jeweils quer zur Förderrichtung ausgerichtet sind und jeweils mehrere Lebensmittelprodukte (5) in parallelen Förderspuren enthalten,
b) einem unteren Produktförderer (8) zur Förderung der Lebensmittelprodukte (5) in einer Förderrichtung,
c) einem oberen Produktförderer (7, 9) zur Förderung der Lebensmittelprodukte (5) in der Förderrichtung, wobei der obere Produktförderer (7, 9) über dem unteren Produktförderer (8) angeordnet ist und die auf dem oberen Produktförderer (7, 9) geförderten Lebensmittelprodukte (5) auf die Lebensmittelprodukte (5) stapelt, die auf dem unteren Produktförderer (8) gefördert werden,
d) einem vertikal schwenkbaren Verteilerförderer (6, 6A-6H), der die Lebensmittelprodukte (5) von dem Einlass (4) aufnimmt und in Abhängigkeit von seiner Schwenkstellung wahlweise an den unteren Produktförderer (8) oder an den oberen Produktförderer (7, 9) weiterleitet,
e) einem Ausgangsförderer (10), der die Lebensmittelprodukte (5) von dem unteren Produktförderer (8) und dem oberen Produktförderer (7, 9) teilweise gestapelt übernimmt, und
f) einem Auslass (11) zur Abgabe der gestapelten Lebensmittelprodukte (5) in Produktreihen, die jeweils quer zur Förderrichtung ausgerichtet sind und jeweils mehrere Lebensmittelprodukte (5) in parallelen Förderspuren als Produktstapel (13) enthalten,
**dadurch gekennzeichnet,**
g) **dass** die einzelnen Förderspuren (6A-6H) des Verteilerförderers (6, 6A-6H) unabhängig voneinander vertikal schwenkbar sind, um die einlaufenden Lebensmittelprodukte (5) individuell für jede Förderspur wahlweise an den unteren Produktförderer (8) oder an den oberen Produktförderer (7, 9) weiterzuleiten.

2. Fördereinrichtung (2) nach Anspruch 1, **dadurch gekennzeichnet,**
a) **dass** der obere Produktförderer (7, 9) ein Shuttle-Förderer (8) ist, der quer zu der Förderrichtung verfahrbar ist, oder
b) **dass** der untere Produktförderer (8) ein Shuttle-Förderer (8) ist, der quer zu der Förderrichtung verfahrbar ist, oder
c) **dass** der untere Produktförderer (8) und der obere Produktförderer (7, 9) Shuttle-Förderer (8) sind, die jeweils quer zu der Förderrichtung verfahrbar ist.

3. Fördereinrichtung (2) nach einem der vorhergehenden Ansprüche, **dadurch gekennzeichnet, dass** eine Steuereinrichtung vorgesehen ist, welche das vertikale Verschwenken der Förderspuren des Verteilerförderers (6, 6A-6H) in Abhängigkeit von folgenden Betriebsparametern steuert:
a) Anzahl der Lebensmittelprodukte (5) in den eingangsseitig einlaufenden Produktreihen, und
b) Anzahl der Lebensmittelprodukte (5) in den ausgangsseitig auslaufenden Produktreihen.

4. Fördereinrichtung (2) nach Anspruch 3, **dadurch gekennzeichnet,**
a) **dass** die Steuereinrichtung eine erste Betriebsart einstellt, wenn die Anzahl der Lebensmittelprodukte (5) in den eingangsseitig einlaufenden Produktreihen doppelt so groß ist wie die Anzahl der Lebensmittelprodukte (5) in den ausgangsseitig auslaufenden Produktreihen, und
b) **dass** die Steuereinrichtung in der ersten Betriebsart den Verteilerförderer (6, 6A-6H) individuell für die einzelnen Förderspuren (6A-6H) entweder nach oben zu dem oberen Produktförderer (7, 9) oder nach unten zu dem unteren Produktförderer (8) schwenkt.

5. Fördereinrichtung (2) nach Anspruch 4, **dadurch gekennzeichnet, dass** die Steuereinrichtung in der ersten Betriebsart den Shuttle-Förderer (8) seitlich verschiebt, um die Lebensmittelprodukte (5) auf dem oberen Produktförderer (7, 9) und die Lebensmittelprodukte (5) auf dem unteren Produktförderer (8) in seitlicher Richtung für eine Stapelung auszurichten.

6. Fördereinrichtung (2) nach Anspruch 4 oder 5, **dadurch gekennzeichnet, dass** in der ersten Betriebsart der Verteilerförderer (6, 6A-6H) seine Schwenkstellung in den einzelnen Förderspuren (6A-6H) nicht dynamisch ändert, sondern beibehält.

7. Fördereinrichtung (2) nach einem der Ansprüche 4 bis 6, **dadurch gekennzeichnet, dass** in der ersten Betriebsart die einzelnen Förderpuren (6A-6H) des Verteilerförderers (6, 6A-6H) quer zu der Förderrichtung abwechselnd nach oben und nach unten geschwenkt sind, so dass die Lebensmittelprodukte (5) innerhalb einer Produktreihe abwechselnd nach oben zu dem oberen Produktförderer (7, 9) und nach unten zu dem unteren Produktförderer (8) geleitet werden.

8. Fördereinrichtung (2) nach einem der Ansprüche 3 bis 7, **dadurch gekennzeichnet,**
a) **dass** die Steuereinrichtung eine zweite Betriebsart einstellt, wenn die Anzahl der Lebensmittelprodukte (5) in den eingangsseitig einlaufenden Produktreihen gleich der Anzahl der Lebensmittelprodukte (5) in den ausgangsseitig auslaufenden Produktreihen ist, und
b) **dass** die Steuereinrichtung in der zweiten Betriebsart den Verteilerförderer (6, 6A-6H) mit allen Förderspuren (6A-6H) gemeinsam entweder nach oben zu dem oberen Produktförderer (7, 9) oder nach unten zu dem unteren Produktförderer (8) schwenkt.

9. Fördereinrichtung (2) nach Anspruch 8, **dadurch gekennzeichnet, dass** die eingangsseitig einlaufenden Produktreihen von dem Verteilerförderer (6, 6A-6H) in der zweiten Betriebsart jeweils als Ganzes abwechselnd nach oben zu dem oberen Produktförderer (7, 9) und nach unten zu dem unteren Produktförderer (8) geleitet werden.

10. Betriebsverfahren für eine Fördereinrichtung (2) zum Fördern und Stapeln von Lebensmittelprodukten, insbesondere von Wurstscheiben oder Käsescheiben, mittels einer Fördereinrichtung (2) nach einem der vorhergehenden Ansprüche, mit den folgenden Schritten:
a) eingangsseitige Aufnahme von Lebensmittelprodukten (5) in Produktreihen, die jeweils quer zur Förderrichtung ausgerichtet sind und jeweils mehrere Lebensmittelprodukte (5) in parallelen Förderspuren enthalten,
b) Verteilung der eingangsseitig einlaufenden Lebensmittelprodukte (5) auf einen oberen Produktförderer (7, 9) oder einen unteren Produktförderer (8),
c) Stapeln der Lebensmittelprodukte (5) von dem oberen Produktförderer (7, 9) auf die Lebensmittelprodukte (5) von dem unteren Produktförderer (8), und
d) ausgangsseitige Abgabe der gestapelten Lebensmittelprodukte (5) in Produktreihen, die jeweils quer zur Förderrichtung ausgerichtet sind und jeweils mehrere Lebensmittelprodukte (5) in parallelen Förderspuren als Produktstapel (13) enthalten, wobei
e) die eingangsseitig einlaufenden Lebensmittelprodukte (5) in einer ersten Betriebsart bei jeder Produktreihe individuell für die einzelnen Förderspuren entweder nach oben zu dem oberen Produktförderer (7, 9) oder nach unten zu dem unteren Produktförderer (8) geleitet werden.

11. Betriebsverfahren nach Anspruch 10, wobei die eingangsseitig einlaufenden Lebensmittelprodukte (5) in einer zweiten Betriebsart gemeinsam für jede Produktreihe entweder nach oben zu dem oberen Produktförderer (7, 9) oder nach unten zu dem unteren Produktförderer (8) geleitet werden.

12. Betriebsverfahren nach Anspruch 11, wobei
a) die erste Betriebsart eingestellt wird, wenn die Anzahl der Lebensmittelprodukte (5) in den eingangsseitig einlaufenden Produktreihen doppelt so groß ist wie die Anzahl der Lebensmittelprodukte (5) in den ausgangsseitig auslaufenden Produktreihen, und
b) die zweite Betriebsart eingestellt wird, wenn die Anzahl der Lebensmittelprodukte (5) in den eingangsseitig einlaufenden Produktreihen gleich groß ist wie die Anzahl der Lebensmittelprodukte (5) in den ausgangsseitig auslaufenden Produktreihen.

13. Betriebsverfahren nach einem der Ansprüche 10 bis 12, wobei
a) in der zweiten Betriebsart der obere Produktförderer (7, 9) relativ zu dem unteren Produktförderer (8) um einen bestimmten seitlichen Versatz verschoben wird, und/oder
b) der seitliche Versatz in Abhängigkeit von der gewünschten seitlichen Überdeckung der Scheiben in dem fertigen Produktstapel (13) gewählt wird.

## Claims

1. Conveyor system (2) for conveying food products, in particular sausage slices or cheese slices, and for formatting the food products (5) in product stacks (13), with
a) an inlet (4) for receiving the food products (5) in product rows which are each aligned transversely to the conveying direction and each contain a plurality of food products (5) in parallel conveying tracks,
b) a lower product conveyor (8) for conveying the food products (5) in a conveying direction,
c) an upper product conveyor (7, 9) for conveying the food products (5) in the conveying direction, wherein the upper product conveyor (7, 9) is arranged above the lower product conveyor (8) and stacks the food products (5) conveyed on the upper product conveyor (7, 9) on the food products (5) which are conveyed on the lower product conveyor (8),
d) a vertically swivelling distributor conveyor (6, 6A-6H) which receives the food products (5) from the inlet (4) and, depending on its swivelling position, selectively forwards them to the lower product conveyor (8) or to the upper product conveyor (7, 9),
e) an output conveyor (10) which receives the food products (5) from the lower product conveyor (8) and the upper product conveyor (7, 9) partially stacked; and
f) an outlet (11) for outputting the stacked food products (5) in product rows which are each aligned transversely to the conveying direction and each contain a plurality of food products (5) in parallel conveying tracks as product stacks (13),
**characterized in**
g) **that** the individual conveying tracks (6A-6H) of the distributor conveyor (6, 6A-6H) can be swivelled vertically independently of one another in order to forward the incoming food products (5) individually for each conveying track selectively to the lower product conveyor (8) or to the upper product conveyor (7, 9).

2. Conveyor system (2) according to claim 1, **characterised in**
a) **that** the upper product conveyor (7, 9) is a shuttle conveyor (8) which can be moved transversely to the conveying direction, or
b) **that** the lower product conveyor (8) is a shuttle conveyor (8) which can be moved transversely to the conveying direction, or
c) **that** the lower product conveyor (8) and the upper product conveyor (7, 9) are shuttle conveyors (8) which can each be moved transversely to the conveying direction.

3. Conveyor system (2) according to one of the preceding claims, **characterized in that** a control unit is provided which controls the vertical swivelling of the conveying tracks of the distributor conveyor (6, 6A-6H) as a function of the following operating parameters:
a) the number of food products (5) in the product rows arriving on the input side, and
b) the number of food products (5) in the product rows ending on the exit side.

4. Conveyor system (2) according to claim 3, **characterised in**
a) **that** the control unit sets a first operating mode if the number of food products (5) in the product rows running in on the input side is twice as large as the number of food products (5) in the product rows running out on the output side, and
b) **that** in the first operating mode, the control unit swivels the distributor conveyor (6, 6A-6H) individually for the individual conveying tracks (6A-6H) either upwards to the upper product conveyor (7, 9) or downwards to the lower product conveyor (8).

5. Conveyor system (2) according to claim 4, **characterized in that** the control means in the first mode displaces the shuttle conveyor (8) laterally to align the food products (5) on the upper product conveyor (7, 9) and the food products (5) on the lower product conveyor (8) laterally for stacking.

6. Conveyor system (2) according to claim 4 or 5, **characterised in that,** in the first operating mode, the distributor conveyor (6, 6A-6H) does not dynamically change its swivelling position in the individual conveyor tracks (6A-6H) but retains it.

7. Conveyor system (2) according to one of claims 4 to 6, **characterized in that** in the first operating mode the individual conveying tracks (6A-6H) of the distributor conveyor (6, 6A-6H) are swivelled upwards and downwards alternately transversely to the conveying direction, so that the food products (5) within a product row are guided alternately upwards to the upper product conveyor (7, 9) and downwards to the lower product conveyor (8).

8. Conveyor system (2) according to one of claims 3 to 7, **characterised in that** the conveyor system (2) comprises a plurality of conveyor elements,
a) the control unit sets a second operating mode if the number of food products (5) in the product rows running in on the input side is equal to the number of food products (5) in the product rows running out on the output side, and
b) in the second operating mode, the control unit swivels the distributor conveyor (6, 6A-6H) with all conveying tracks (6A-6H) together either upwards to the upper product conveyor (7, 9) or downwards to the lower product conveyor (8).

9. Conveyor system (2) according to claim 8, **characterised in that** the product rows running in on the input side are guided as a whole alternately upwards to the upper product conveyor (7, 9) and downwards to the lower product conveyor (8) by the distributor conveyor (6, 6A-6H) in the second operating mode in each case.

10. Operating method for a conveyor system (2) for conveying and stacking food products, in particular sausage slices or cheese slices, by means of a conveyor system (2) according to one of the preceding claims, comprising the following steps:
a) receiving food products (5) on an input side in product rows which are each aligned transversely to the conveying direction and each contain a plurality of food products (5) in parallel conveying tracks,
b) distribution of the incoming food products (5) on the input side to an upper product conveyor (7, 9) or to a lower product conveyor (8),
c) stacking the food products (5) from the upper product conveyor (7, 9) onto the food products (5) from the lower product conveyor (8), and
d) outputting the stacked food products (5) on the outlet side in product rows which are each aligned transversely to the conveying direction and each contain several food products (5) in parallel conveying tracks as product stacks (13),
wherein
e) in a first operating mode, the food products (5) arriving on the input side are guided for each product row individually for the individual conveying tracks either upwards to the upper product conveyor (7, 9) or downwards to the lower product conveyor (8).

11. Operating method according to claim 10, wherein the food products (5) arriving at the inlet side are jointly guided in a second operating mode for each product row either upwards to the upper product conveyor (7, 9) or downwards to the lower product conveyor (8).

12. Operating method according to claim 11, wherein
a) the first operating mode is set if the number of food products (5) in the product rows entering on the input side is twice as large as the number of food products (5) in the product rows leaving on the output side, and
b) the second operating mode is set if the number of food products (5) in the incoming product rows on the input side is the same as the number of food products (5) in the outgoing product rows on the output side.

13. Operating method according to one of claims 10 to 12, wherein
a) in the second operating mode, the upper product conveyor (7, 9) is displaced relative to the lower product conveyor (8) by a certain lateral offset, and/or
b) the lateral offset is selected as a function of the desired lateral coverage of the slices in the finished product stack (13).

## Revendications

1. Dispositif de transport (2) pour transporter des produits alimentaires, en particulier des tranches de charcuterie ou des tranches de fromage, et pour conditionner les produits alimentaires (5) en piles de produits (13), avec
a) une entrée (4) destinée à recevoir les produits alimentaires (5) en rangées de produits, qui sont orientées respectivement de manière transversale par rapport à la direction de transport et contiennent respectivement plusieurs produits alimentaires (5) dans des voies de transport parallèles,
b) un transporteur de produits inférieur (8) destiné à transporter les produits alimentaires (5) dans une direction de transport,
c) un transporteur de produits supérieur (7, 9) destiné à transporter les produits alimentaires (5) dans la direction de transport, dans lequel le transporteur de produits supérieur (7, 9) est disposé au-dessus du transporteur de produits inférieur (8) et empile les produits alimentaires (5) transportés sur le transporteur de produits supérieur (7, 9) sur les produits alimentaires (5) qui sont transportés sur le transporteur de produits inférieur (8),
d) un transporteur de distribution (6, 6A - 6H) pouvant être pivoté de manière verticale, qui reçoit les produits alimentaires (5) provenant de l'entrée (4) et les transfère, en fonction de sa position de pivotement, au choix au transporteur de produits inférieur (8) ou au transporteur de produits supérieur (7, 9),
e) un transporteur de sortie (10), qui réceptionne en partie de manière empilée les produits alimentaires (5) du transporteur de produits inférieur (8) et du transporteur de produits supérieur (7, 9), et
f) une sortie (11) destinée à livrer les produits alimentaires (5) empilés en rangées de produits, qui sont orientées respectivement de manière transversale par rapport à la direction de transport et contiennent respectivement plusieurs produits alimentaires (5) dans des voies de transport parallèles en tant que piles de produits (13),
**caractérisé en ce**
g) **que** les diverses voies de transport (6A - 6H) du transporteur de distribution (6, 6A- 6H) peuvent être pivotées verticalement indépendamment les unes des autres pour transférer les produits alimentaires (5) entrants au choix au transporteur de produits inférieur (8) ou au transporteur de produits supérieur (7, 9) individuellement pour chaque voie de transport.

2. Dispositif de transport (2) selon la revendication 1, **caractérisé en ce**
a) **que** le transporteur de produits supérieur (7, 9) est un transporteur à navette (8), qui peut être déplacé de manière transversale par rapport à la direction de transport, ou
b) **que** le transporteur de produits inférieur (8) est un transporteur à navette (8), qui peut être déplacé de manière transversale par rapport à la direction de transport, ou
c) **que** le transporteur de produits inférieur (8) et le transporteur de produits supérieur (7, 9) sont des transporteurs à navette (8), qui peuvent être déplacés respectivement de manière transversale par rapport à la direction de transport.

3. Dispositif de transport (2) selon l'une quelconque des revendications précédentes, **caractérisé en ce qu'**est prévu un dispositif de commande, lequel commande le pivotement vertical des voies de transport du transporteur de distribution (6, 6A - 6H) en fonction de paramètres de fonctionnement suivants :
a) nombre des produits alimentaires (5) dans les rangées de produits entrants côté entrée, et
b) nombre des produits alimentaires (5) dans les rangées de produits sortants côté sortie.

4. Dispositif de transport (2) selon la revendication 3, **caractérisé en ce**
a) **que** le dispositif de commande règle un premier mode de fonctionnement lorsque le nombre des produits alimentaires (5) dans les rangées de produits entrants côté entrée est deux fois plus grand que le nombre des produits alimentaires (5) dans les rangées de produits sortants côté sortie, et
b) **que** le dispositif de commande fait pivoter dans le premier mode de fonctionnement le transporteur de distribution (6, 6A - 6H) soit vers le haut vers le transporteur de produits supérieur (7, 9) soit vers le bas vers le transporteur de produits inférieur (8) individuellement pour les diverses voies de transport (6A - 6H) .

5. Dispositif de transport (2) selon la revendication 4, **caractérisé en ce que** le dispositif de commande fait coulisser latéralement le transporteur à navette (8) dans le premier mode de fonctionnement pour orienter les produits alimentaires (5) sur le transporteur de produits supérieur (7, 9) et les produits alimentaires (5) sur le transporteur de produits inférieur (8) dans une direction latérale pour un empilement.

6. Dispositif de transport (2) selon la revendication 4 ou 5, **caractérisé en ce que** dans le premier mode de fonctionnement, le transporteur de distribution (6, 6-6H) ne modifie pas de manière dynamique, conserve au contraire sa position de pivotement dans les diverses voies de transport (6A - 6H) .

7. Dispositif de transport (2) selon l'une quelconque des revendications 4 à 6, **caractérisé en ce que** dans le premier mode de fonctionnement, les diverses voies de transport (6A - 6H) du transporteur de distribution (6, 6A - 6H) sont pivotées en alternance vers le haut et vers le bas de manière transversale par rapport à la direction de transport de sorte que les produits alimentaires (5) sont acheminés à l'intérieur d'une rangée de produits en alternance vers le haut vers le transporteur de produits supérieur (7, 9) et vers le bas vers le transporteur de produits inférieur (8).

8. Dispositif de transport (2) selon l'une quelconque des revendications 3 à 7, **caractérisé en ce**
a) **que** le dispositif de commande règle un deuxième mode de fonctionnement lorsque le nombre des produits alimentaires (5) dans les rangées de produits entrants côté entrée est égal au nombre des produits alimentaires (5) dans les rangées de produits sortants côté sortie, et
b) **que** le dispositif de commande dans le deuxième mode de fonctionnement fait pivoter le transporteur de distribution (6, 6A - 6H) avec toutes les voies de transport (6A - 6H) conjointement soit vers le haut vers le transporteur de produits supérieur (7, 9) soit vers le bas vers le transporteur de produits inférieur (8).

9. Dispositif de transport (2) selon la revendication 8, **caractérisé en ce que** les rangées de produits entrants côté entrée sont acheminées par le transporteur de distribution (6, 6A - 6H) dans le deuxième mode de fonctionnement respectivement comme un tout en alternance vers le haut vers le transporteur de produits supérieur (7, 9) et vers le bas vers le transporteur de produits inférieur (8).

10. Procédé de fonctionnement pour un dispositif de transport (2) destiné à transporter et empiler des produits alimentaires, en particulier des tranches de charcuterie ou des tranches de fromage, au moyen d'un dispositif de transport (2) selon l'une quelconque des revendications précédentes, avec les étapes suivantes :
a) de réception côté entrée de produits alimentaires (5) en rangées de produits, qui sont orientées respectivement de manière transversale par rapport à la direction de transport et contiennent respectivement plusieurs produits alimentaires (5) dans des voies de transport parallèles,
b) de distribution des produits alimentaires (5) entrants côté entrée sur un transporteur de produits supérieur (7, 9) ou sur un transporteur de produits inférieur (8),
c) d'empilement des produits alimentaires (5) du transporteur de produits supérieur (7, 9) sur les produits alimentaires (5) du transporteur de produits inférieur (8), et
d) de livraison côté sortie des produits alimentaires (5) empilés en rangées de produits, qui sont orientées respectivement de manière transversale par rapport à la direction de transport et contiennent respectivement plusieurs produits alimentaires (5) dans des voies de transport parallèles en tant que piles de produits (13),
dans lequel
e) les produits alimentaires (5) entrants côté entrée sont acheminés dans un premier mode de fonctionnement pour chaque rangée de produits individuellement pour les diverses voies de transport soit vers le haut vers le transporteur de produits supérieur (7, 9) soit vers le bas vers le transporteur de produits inférieur (8).

11. Procédé de fonctionnement selon la revendication 10, dans lequel
les produits alimentaires (5) entrants côté entrée sont acheminés dans un deuxième mode de fonctionnement conjointement pour chaque rangée de produits soit vers le haut vers le transporteur de produits supérieur (7, 9) soit vers le bas vers le transporteur de produits inférieur (8).

12. Procédé de fonctionnement selon la revendication 11, dans lequel
a) le premier mode de fonctionnement est réglé lorsque le nombre des produits alimentaires (5) dans les rangées de produits entrants côté entrée est deux fois plus grand que le nombre des produits alimentaires (5) dans les rangées de produits sortants côté sortie, et
b) le deuxième mode de fonctionnement est réglé lorsque le nombre des produits alimentaires (5) dans les rangées de produits entrants côté entrée est égal au nombre des produits alimentaires (5) dans les rangées de produits sortants côté sortie.

13. Procédé de fonctionnement selon l'une quelconque des revendications 10 à 12, dans lequel
a) dans le deuxième mode de fonctionnement, le transporteur de produits supérieur (7, 9) est coulissé d'un décalage latéral défini par rapport au transporteur de produits inférieur (8), et/ou
b) le décalage latéral est choisi en fonction du recouvrement latéral souhaité des tranches dans la pile de produits (13) finie.
